# EUROPEAN PATENT SPECIFICATION

(11) **EP 2 682 291 B1**
(45) Date of publication and mention of the grant of the patent: **08.11.2017**
(21) Application number: 11860157.4
(22) Date of filing: 04.03.2011
(51) Int. Cl.: B60H 1/03, B60H 1/08, B60H 1/32, B60H 1/00, F25B 21/02

(54) **VEHICLE AIR-CONDITIONING APPARATUS**
FAHRZEUGKLIMAANLAGE
APPAREIL DE CLIMATISATION POUR VÉHICULE

(43) Date of publication of application: 08.01.2014
(73) Proprietor: TOYOTA JIDOSHA KABUSHIKI KAISHA, Toyota-shi, Aichi-ken, 471-8571 (JP)
(72) Inventor: MORITA, Masaki, Toyota-shi Aichi 471-8571 (JP)
(74) Representative: D Young & Co LLP
(86) International application number: PCT/JP2011/055132
(87) International publication number: WO 2012/120603

(56) References cited:
- WO-A1-2008/010675
- JP-A- 2006 001 530
- JP-A- 2011 001 048
- KR-A- 20080 008 875
- US-A1- 2010 287 952

## Description

### TECHNICAL FIELD

The present invention relates to a vehicle air-conditioning apparatus.

### BACKGROUND ART

In a vehicle having an internal combustion engine, such as an automobile, the temperature in the passenger compartment is adjusted by cooling air sent to the compartment by a cooling device, or heating the air by use of heat of the internal combustion engine. However, there are an increasing number of types of vehicles in which it is difficult to utilize the internal combustion engine as a heat source for air-conditioning (temperature regulation) of the compartment. Such vehicles include an electric vehicle that does not have the internal combustion engine but only has a motor as a drive source, and a hybrid vehicle that has a motor and an internal combustion engine as drive sources, and frequently stops the internal combustion engine.

From the circumstance described above, it is considered that a Peltier element described in Patent Document 1 may be used for air-conditioning of a passenger compartment, for example. A Peltier element includes a cooling portion absorbing heat and a heating portion discharging heat. The cooling portion and the heating portion can be interchanged by inversing the polarity of an electrode. When an air-conditioning apparatus is used to decrease the temperature of the passenger compartment for cooling, air sent into the passenger compartment is cooled by the cooling portion of the Peltier element. On the other hand, when the air-conditioning apparatus is used to increase the temperature of the passenger compartment for warming, the polarity of the electrode on the Peltier element is inversed from the polarity for cooling, whereby the air sent into the passenger compartment is heated by the heating portion of the Peltier element.

### PRIOR ART DOCUMENT

### Patent Document

### Patent Document 1

Japanese Laid-Open Patent Publication No. 10-35268 (paragraphs [0012] to [0014], Fig. 1) US 2010/0287952 A1 relates to a temperature control system with thermoelectric device according to the preamble of claim 1.

### SUMMARY OF THE INVENTION

### Problems that the Invention is to Solve

When a Peltier element is used for air-conditioning of the passenger compartment as described above, the air-conditioning (warming) of the passenger compartment is possible even in a vehicle in which it is difficult to utilize the internal combustion as a heat source for air-conditioning of the passenger compartment.

However, to obtain the structure of an air-conditioning apparatus using a Peltier element, significant changes must be made to the structure of a conventional air-conditioning apparatus that cools air sent to a passenger compartment by a cooling device and heats the air by utilizing heat of the internal combustion engine. When the structure of the air-conditioning apparatus is significantly changed, a conventional facility cannot be used for producing the apparatus. Therefore, a facility for producing the apparatus has to be remodeled. Since the facility for producing the apparatus has to be remodeled, costs for producing the air-conditioning apparatus are increased.

It has therefore been desired that air-conditioning of a passenger compartment be done (the passenger compartment be warmed) in a vehicle in which it is difficult to use an internal combustion engine as a heat source for the air-conditioning of the passenger compartment, while utilizing a conventional air-conditioning apparatus that cools air sent to the passenger compartment by a cooling device and heats the air by utilizing the heat of the internal combustion engine.

Accordingly, it is an objective of the present invention to provide a vehicle air-conditioning apparatus that performs air-conditioning of a passenger compartment without entailing a significant change in the structure in a vehicle in which it is difficult to use an internal combustion engine as a heat source for the air-conditioning of the passenger compartment.

### Means for Solving the Problems

The object of the invention is solved by an air-conditioning apparatus according to claim 1. Further aspects of the invention are set out in the dependent claims.

In order to achieve the foregoing object, in a vehicle air-conditioning apparatus according to the present invention, upon cooling or heating air sent to the passenger compartment for adjusting a temperature in the passenger compartment, the air is cooled by a cooling device, and the air is heated by a Peltier element. One mounted in a conventional air-conditioning apparatus can be used as the cooling device. Therefore, the significant change in the structure of the air-conditioning apparatus is avoided. Even in a vehicle in which it is difficult to use the internal combustion engine as a heat source for the air-conditioning of the passenger compartment, air sent to the passenger compartment can be heated by a Peltier element. Therefore, the air-conditioning of the passenger compartment can be done (the passenger compartment can be warmed). Accordingly, an air-conditioning of the passenger compartment can be done without entailing a significant change in the structure in a vehicle in which it is difficult to use the internal combustion engine as a heat source for the air-conditioning of the passenger compartment.

The conventional air-conditioning apparatus includes a circulation circuit for circulating coolant performing heat transfer with an internal combustion engine mounted on a vehicle, and air sent to the passenger compartment is heated by the coolant. Therefore, a vehicle having an internal combustion engine can employ a method for heating the coolant in the circulation circuit by the heating portion of a Peltier element and heating the air sent to the passenger compartment through the heated coolant, as a method for heating the air by the Peltier element. In this case, the air sent to the passenger compartment can be heated by the Peltier element by utilizing the circulation circuit mounted in the conventional air-conditioning apparatus. Accordingly, the significant change in the structure of the air-conditioning apparatus from the conventional structure can be avoided. When the internal combustion engine is operated to generate heat, this heat can be collected by the coolant circulating in the circulation circuit, and can be utilized for the air-conditioning of the passenger compartment (for warming the passenger compartment).

In accordance with one aspect of the present invention, the circulation circuit includes a first path that allows the coolant circulating in the circulation circuit to pass through the internal combustion engine and a second path that allows the coolant to bypass the internal combustion engine. Either one of the first path and the second path is used as a path for circulating the coolant. In accordance with one aspect of the present invention, the circulation circuit includes a first path that allows the coolant circulating in the circulation circuit to pass through the internal combustion engine and a second path that allows the coolant to bypass the internal combustion engine. Either one of the first path and the second path is used as a path for circulating the coolant. In this case, the second path can be selected as the path for circulating the coolant in the circulation circuit, when the internal combustion engine generates a small amount of heat. On the other hand, the first path can be selected when the internal combustion engine generates a large amount of heat. If the second path is selected as the path for circulating the coolant in the circulation circuit as described above when the internal combustion engine generates a small amount of heat, the heat of the coolant heated by the heating portion of the Peltier element cannot be drawn by the internal combustion engine. Therefore, the coolant is effectively heated by the heating portion of the Peltier element. If the first path is selected as the path for circulating the coolant in the circulation circuit as described above when the internal combustion engine generates a large amount of heat, the coolant can be heated by the internal combustion engine. Therefore, the application of heat to the coolant by the heating portion of the Peltier element can be stopped, or the amount of heat for heating the coolant can be reduced.

In accordance with another aspect of the present invention, the circulation circuit includes a radiator. When the temperature of the coolant circulating in the circulation circuit is greater than or equal to a predetermined determination value, the radiator allows to flow therein to perform heat transfer between the coolant and ambient air. The Peltier element includes a cooling portion that performs heat transfer with the coolant circulating in a coolant circuit. The coolant circuit guides the coolant circulating therein to the radiator and performs heat transfer between the coolant and ambient air at the radiator. In accordance with one aspect of the present invention, the circulation circuit includes a radiator. When the temperature of the coolant circulating in the circulation circuit is greater than or equal to a predetermined determination value, the radiator allows coolant to flow therein to perform heat transfer between the coolant and ambient air. The Peltier element includes a cooling portion that performs heat transfer with the coolant circulating in a coolant circuit. The coolant circuit guides the coolant circulating therein to the radiator and performs heat transfer between the coolant and ambient air at the radiator. The heat transfer described above prevents an excessive temperature drop of the coolant in the coolant circuit. Therefore, an excessive temperature drop of the cooling portion of the Peltier element performing the heat transfer with the coolant is also prevented. When the heating portion performs the heating operation, heat is transferred from the cooling portion to the heating portion of the Peltier element. Therefore, in the Peltier element, the heat is more efficiently transferred from the cooling portion to the heating portion; in other words, the coolant is more efficiently heated by the heating portion as the temperature difference between the cooling portion and the heating portion becomes smaller. Since a temperature drop of the cooling portion of the Peltier element is prevented as described above, the temperature difference between the heating portion and the cooling portion of the Peltier element is reduced, and the heating portion of the Peltier element efficiently heats the coolant.

In accordance with one aspect of the present invention, the Peltier element includes a cooling portion that performs heat transfer with the coolant circulating in the coolant circuit for cooling an electric device mounted on a vehicle. When the heating portion performs heating operation, heat is transferred from the cooling portion to the heating portion of the Peltier element. Therefore, the temperature of the cooling portion decreases. When the coolant having the decreased temperature due to the heat transfer between the cooling portion of the Peltier element and the coolant in the coolant circuit is used for cooling the electric device, the electric device is effectively cooled. Since the coolant receives heat from the electric device, an excessive temperature drop of the coolant in the coolant circuit is prevented. Therefore, an excessive temperature drop of the cooling portion of the Peltier element is also prevented. In the Peltier element, the heat is more efficiently transferred from the cooling portion to the heating portion. In other words, the coolant is more efficiently heated by the heating portion as the temperature difference between the cooling portion and the heating portion becomes smaller. Accordingly, when a temperature drop of the cooling portion of the Peltier element is prevented as described above, the temperature difference between the heating portion and the cooling portion of the Peltier element is reduced. As a result, the heating operation by the heating portion of the Peltier element is efficiently performed.

In accordance with one aspect of the present invention, the coolant circuit includes a heat exchanger that allows the coolant circulating in the coolant circuit to flow therein for performing heat transfer between the coolant and ambient air. This structure prevents an excessive temperature drop of the coolant due to the heat transfer between the coolant and ambient air by the heat exchanger in the coolant circuit, when a temperature drop of the coolant cannot be prevented only by the heat from the electric device under the condition in which the coolant in the coolant circuit is cooled by the cooling portion of the Peltier element. Accordingly, an excessive temperature drop of the cooling portion of the Peltier element, which performs heat transfer with the coolant, is also prevented. When a temperature drop of the cooling portion of the Peltier element is prevented as described above, the temperature difference between the heating portion and the cooling portion of the Peltier element is reduced. As a result, the heating operation by the heating portion of the Peltier element is efficiently performed.

In accordance with one aspect of the present invention, the vehicle air-conditioning apparatus includes a control unit that switches the path for circulating the coolant in the circulation circuit to the second path, and allows the heating portion of the Peltier element to perform heating operation, when the passenger compartment is warmed during when the vehicle runs with the internal combustion engine being stopped. When the passenger compartment is warmed during when the vehicle runs with the internal combustion engine being operated, the control unit switches the path for circulating the coolant in the circulation circuit to the first path, and stops the heating operation by the heating portion of the Peltier element. If the second path is selected as described above as the path for circulating the coolant in the circulation circuit when the passenger compartment is warmed during when the vehicle runs with the internal combustion engine being stopped, the heat of the coolant heated by the heating portion of the Peltier element is not removed by the internal combustion engine. Accordingly, the coolant is effectively heated by the heating portion of the Peltier element. If the first path is selected as described above as the path for circulating the coolant in the circulation circuit when the passenger compartment is warmed during when the vehicle runs with the internal combustion engine being operated, the coolant is heated by the internal combustion engine, although the coolant is not heated by the heating portion of the Peltier element. Accordingly, the heating operation of the heating portion of the Peltier element is stopped, and unnecessary operation of the Peltier element is avoided.

### BRIEF DESCRIPTION OF THE DRAWINGS

Fig. 1 is a schematic diagram illustrating an entire air-conditioning apparatus according to a first embodiment;
Fig. 2 is a schematic diagram illustrating a first mode in the air-conditioning apparatus of the first embodiment;
Fig. 3 is a schematic diagram illustrating a second mode in the air-conditioning apparatus of the first embodiment;
Fig. 4 is a schematic diagram illustrating a third mode in the air-conditioning apparatus of the first embodiment;
Fig. 5 is a schematic diagram illustrating a fourth mode in the air-conditioning apparatus of the first embodiment;
Fig. 6 is a schematic diagram illustrating a fifth mode in the air-conditioning apparatus of the first embodiment;
Fig. 7 is a flowchart illustrating a procedure of an air-conditioning of a passenger compartment;
Fig. 8 is a schematic diagram illustrating an entire air-conditioning apparatus according to a second embodiment;
Fig. 9 is a schematic diagram illustrating a first mode in the air-conditioning apparatus of the second embodiment;
Fig. 10 is a schematic diagram illustrating a second mode in the air-conditioning apparatus of the second embodiment;
Fig. 11 is a schematic diagram illustrating a third mode in the air-conditioning apparatus of the second embodiment;
Fig. 12 is a schematic diagram illustrating a fourth mode in the air-conditioning apparatus of the second embodiment; and
Fig. 13 is a schematic diagram illustrating a fifth mode in the air-conditioning apparatus of the second embodiment.

### MODES FOR CARRYING OUT THE INVENTION

### [First Embodiment]

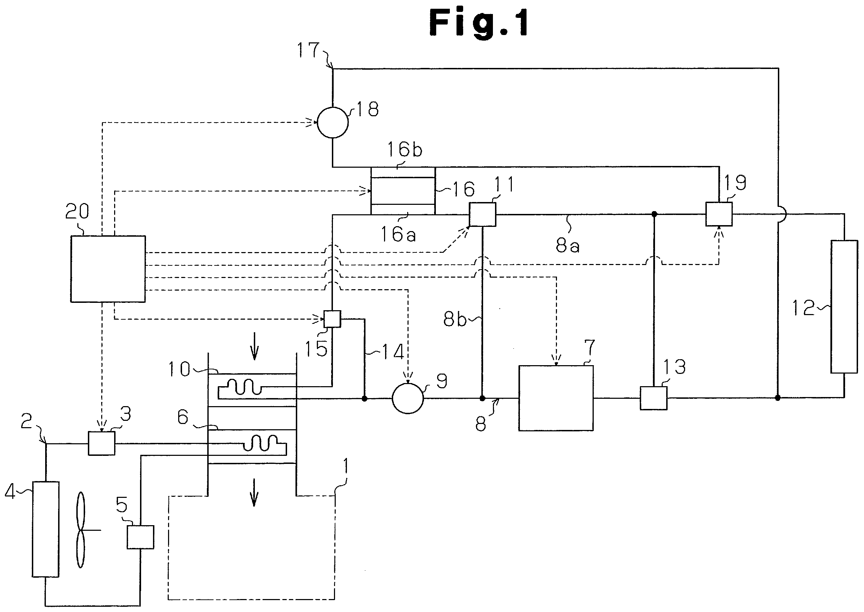

An air-conditioning apparatus for a hybrid vehicle according to a first embodiment of the present invention will now be described with reference to Figs. 1 to 7.

The hybrid vehicle includes, as drive sources, a motor generator and an internal combustion engine, and switches the drive source to be used according to a driving condition or driving requirement. More specifically, the hybrid vehicle uses only the motor generator as the drive source, uses only the internal combustion engine as the drive source, or uses both the internal combustion engine and the motor generator as the drive source.

The air-conditioning apparatus for the hybrid vehicle described above is provided with a cooling device 2 cooling air sent to a passenger compartment 1 as illustrated in Fig. 1. The cooling device 2 is a vapor compression heat pump. The cooling device 2 includes a compressor 3 compressing refrigerant, a condenser 4 that cools the refrigerant, which has been compressed and heated by the compressor 3, by ambient air, an expansion valve 5 that expands the refrigerant cooled by the condenser 4, and an evaporator 6 that performs heat transfer between the refrigerant, which has been expanded and cooled by the expansion valve 5, and the air sent to the passenger compartment 1. With this structure, in the air-conditioning apparatus described above, when the compressor 3 in the cooling device 2 is driven to circulate the refrigerant, the low-temperature refrigerant passes through the evaporator 6 to cool the air sent to the passenger compartment 1 by the refrigerant.

The air-conditioning apparatus is provided with a circulation circuit 8, which circulates coolant performing heat transfer with the internal combustion engine 7, and heats the air sent to the passenger compartment 1 by the coolant. The circulation circuit 8 includes an electric pump 9 for circulating the coolant in the circulation circuit 8, and a heater core 10 that performs heat transfer between the coolant in the circulation circuit 8 and the air sent to the passenger compartment 1 in order to heat the air by the coolant. The circulation circuit 8 also includes a first path 8a that forms the passage of the coolant, circulating in the circulation circuit, in the internal combustion engine 7, a second path 8b that forms a bypass of the coolant from the internal combustion engine 7, and a changeover valve 11 that changes the path for circulating the coolant in the circulation circuit 8 to the first path 8a or to the second path 8b. With the switching operation of the changeover valve 11, either one of the first path 8a and the second path 8b is used as a path for circulating the coolant in the circulation circuit 8. When the internal combustion engine 7 generates heat during when the coolant circulates in the circulation circuit 8 through the first path 8a, the coolant receives heat from the internal combustion engine 7, so that the temperature of the coolant increases.

The first path 8a includes a radiator 12 that performs heat transfer between the coolant and ambient air, and a thermostat 13 that inhibits or allows the passage of the coolant in the radiator 12 based upon the temperature of the coolant in the first path 8a. The thermostat 13 inhibits the passage of the coolant through the radiator 12 when the temperature of the first path 8a is less than a determination value set beforehand. On the other hand, the thermostat 13 allows the passage of the coolant through the radiator 12 when the temperature of the coolant is higher than or equal to the determination value. Accordingly, when the temperature of the coolant is higher than or equal to the determination value during the circulation in the circulation circuit 8 through the first path 8a, the coolant is caused to flow into the radiator 12. The heat transfer between the coolant and ambient air is done in the radiator 12, whereby the coolant is cooled. Thus, an excessive temperature rise of the coolant is prevented.

The circulation circuit 8 is provided with a passage 14 connecting an upstream side and a downstream side of the heater core 10, and a shutoff valve 15 that can shut the circulation through the heater core 10 from the circulation circuit 8. The shutoff valve 15 makes the switching operation in order to allow the coolant to selectively flow through the heater core 10 or the passage 14. When the coolant is caused to flow into the passage 14 by the switching operation of the shutoff valve 15, the coolant does not flow into the heater core 10. Therefore, the heater core 10 is in the state of being shut off from the circulation circuit 8 for the circulation of the coolant. On the other hand, when the switching operation of the shutoff valve 15 is done in order to inhibit the circulation of the coolant in the passage 14, the coolant is caused to flow into the heater core 10. Therefore, the shutoff state of the heater core 10 to the circulation circuit 8 is canceled. Accordingly, when the temperature of the coolant circulating in the circulation circuit 8 is high, the shutoff state of the heater core 10 to the circulation circuit 8 is canceled to cause the coolant to flow into the heater core 10. Thus, the air sent to the passenger compartment 1 is heated by the coolant.

The temperature regulation in the passenger compartment 1 by the air-conditioning apparatus is realized by cooling the air sent to the passenger compartment 1 by the evaporator 6 of the cooling device 2, or by heating the air by the heater core 10 in the circulation circuit 8. The temperature of the coolant passing through the heater core 10 in the circulation circuit 8 increases in receipt of the heat from the internal combustion engine 7. Therefore, the air sent to the compartment 1 is heated by utilizing the heat from the internal combustion engine 7. However, in the hybrid vehicle, the operation of the internal combustion engine 7 frequently stops during the driving by use of the motor generator. Under this condition, it is difficult to use the internal combustion engine 7 as the heat source for adjusting the temperature (for the air-conditioning) of the passenger compartment 1. Accordingly, the air-conditioning apparatus is provided with a Peltier element 16 for heating the coolant in the circulation circuit 8 in order that the air sent to the passenger compartment 1 is heated even under the condition in which the internal combustion engine 7 is difficult to be used as the heat source for adjusting the temperature in the passenger compartment 1.

The Peltier element 16 includes a heating portion 16a for radiating heat and a cooling portion 16b for absorbing heat. The coolant circulating in the circulation circuit 8 is heated by the heating portion 16a. When the heating portion 16a of the Peltier element 16 heats the coolant, heat is transferred to the heating portion 16a from the cooling portion 16b. Therefore, in the Peltier element 16, the heat is more efficiently transferred from the cooling portion 16b to the heating portion 16a, in other words, the coolant is more efficiently heated by the heating portion 16a as the temperature difference between the cooling portion 16b and the heating portion 16a becomes smaller. The coolant heated by the heating portion 16a of the Peltier element 16 heats the air sent to the passenger compartment 1 when passing through the heater core 10. Accordingly, the Peltier element 16 is capable of heating the air sent to the passenger compartment 1 via the coolant, since the heating portion 16a heats the coolant in the circulation circuit 8.

The air-conditioning apparatus is provided with a coolant circuit 17 that circulates the coolant performing heat transfer with the cooling portion 16b of the Peltier element 16. The coolant circuit 17 guides the coolant circulating therein to the radiator 12 of the circulation circuit 8 (the first path 8a) to perform the heat transfer between the coolant and the ambient air by the radiator 12. The coolant circuit 17 shares the portion of the first path 8a from the upstream side to the downstream side of the radiator 12 with the circulation circuit 8. The coolant circuit 17 is provided with an electric pump 18 for circulating the coolant in the circuit 17. The coolant circuit 17 is also provided with a control valve 19 that inhibits and allows passage of coolant between the portion corresponding to the cooling portion 16b of the Peltier element 16 and the portion shared by the first path 8a. The flow of the coolant is inhibited by closing the control valve 19, while it is allowed by opening the control valve 19.

When the coolant in the coolant circuit 17 is cooled by the cooling portion 16b of the Peltier element 16, the coolant is guided to the radiator 12 of the circulation circuit 8 (the first path 8a) by opening the control valve 19 and driving the pump 18 to perform the heat transfer between the coolant and the ambient air. This process prevents an excessive temperature drop of the coolant in the coolant circuit 17. Therefore, an excessive temperature drop of the cooling portion 16b of the Peltier element 16, which performs the heat transfer with the coolant in the coolant circuit 17, is also prevented. As described above, in the Peltier element 16, heat is more efficiently transferred from the cooling portion 16b to the heating portion 16a, in other words, the coolant in the circulation circuit 8 is more efficiently heated by the heating portion 16a as the temperature difference between the cooling portion 16b and the heating portion 16a becomes smaller. Since a temperature drop of the cooling portion 16b of the Peltier element 16 is prevented, the temperature difference between the heating portion 16a and the cooling portion 16b of the Peltier element 16 is reduced, whereby the heating portion 16a of the Peltier element 16 can efficiently heat the coolant in the circulation circuit 8.

The air-conditioning apparatus has an electronic control device 20 mounted on the hybrid vehicle for controlling various operations of the motor generator and the internal combustion engine 7. The electronic control device 20 controls to drive various devices in the air-conditioning apparatus, i.e., controls to drive the compressor 3, the pump 9, the changeover valve 11, the shutoff valve 15, the Peltier element 16, the pump 18, and the control valve 19. The air-conditioning (the temperature regulation) of the passenger compartment 1 in the hybrid vehicle is done through the control of various devices in the air-conditioning apparatus by the electronic control device 20. In the hybrid vehicle described above, an operation mode of the air-conditioning apparatus is switched to one of first to fifth modes for the air-conditioning of the passenger compartment 1. The first to fifth modes of the air-conditioning apparatus for the air-conditioning of the passenger compartment 1 will individually be described below.

### [First mode]

This mode is used to warm the passenger compartment 1 when the hybrid vehicle runs only with the motor generator, in other words, when the hybrid vehicle runs with the internal combustion engine 7 being stopped. When the hybrid vehicle runs only with the motor generator, the heat generated from the internal combustion engine 7 is small. Therefore, it is difficult to use the internal combustion engine 7 as the heat source for warming the passenger compartment 1 (for increasing the temperature in the passenger compartment 1). In order to warm the passenger compartment 1 by heating the air sent to the passenger compartment 1 in the first mode, the air is heated by the Peltier element 16.

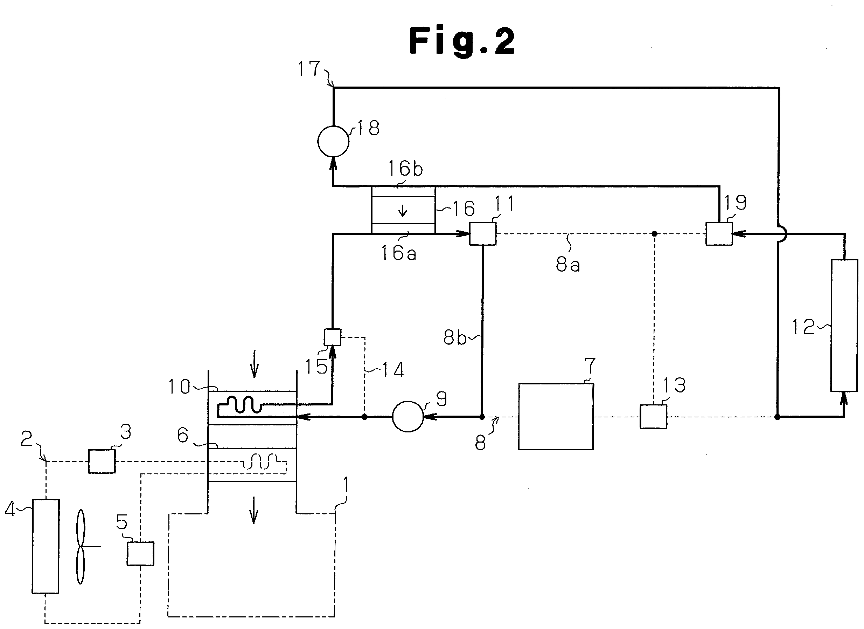

Specifically, as illustrated in Fig. 2, the pump 9 in the circulation circuit 8 is driven to circulate the coolant in the circulation circuit 8, and the changeover valve 11 is operated in order that the second path 8b is used as the path for circulating the coolant. The shutoff state of the heater core 10 to the circulation circuit 8 is canceled through the operation of the shutoff valve 15, and the Peltier element 16 is driven to heat the coolant circulating in the circulation circuit 8 by the heating portion 16a of the Peltier element 16. Thus, the coolant heated by the Peltier element 16 to have an increased temperature is caused to flow through the heater core 10. As a result, the air sent to the compartment 1 is heated by the coolant, and the passenger compartment 1 is warmed by the heated air sent to the passenger compartment 1.

When the coolant in the circulation circuit 8 is heated by the heating portion 16a of the Peltier element 16 by the drive of the Peltier element 16, the heat is transferred from the cooling portion 16b to the heating portion 16a of the Peltier element 16, so that the temperature of the cooling portion 16b drops. In order to prevent an excessive temperature drop of the cooling portion 16b, the control valve 19 in the coolant circuit 17 is opened to allow the flow of the coolant between the portion of the coolant circuit 17 corresponding to the cooling portion 16b of the Peltier element 16 and the shared portion by the first path 8a, and the pump 18 is driven. With this process, the coolant in the coolant circuit 17 is circulated.

When the coolant in the coolant circuit 17 is circulated, an excessive temperature drop of the coolant is prevented due to the heat transfer between the coolant and the ambient air during the passage of the coolant through the radiator 12, although the coolant is cooled by the cooling portion 16b of the Peltier element 16. Since heat is exchanged between the coolant of which the temperature drop is suppressed as described above and the cooling portion 16b of the Peltier element 16, an excessive temperature drop of the cooling portion 16b is prevented. Accordingly, the increase in the temperature difference between the heating portion 16a and the cooling portion 16b of the Peltier element 16 due to a temperature drop of the cooling portion 16b is prevented. Therefore, the coolant in the circulation circuit 8 is efficiently heated by the Peltier element 16.

In the first mode, the compressor 3 in the cooling device 2 is stopped. Therefore, the air sent to the passenger compartment 1 is not cooled by the cooling device 2.

### [Second Mode]

This mode is used to warm the passenger compartment 1 when the hybrid vehicle runs by using both the motor generator and the internal combustion engine 7, or when the hybrid vehicle runs only with the internal combustion engine 7, i.e., when the hybrid vehicle runs with the internal combustion engine 7 being operated. Under the condition described above, heat from the internal combustion engine 7 increases. Therefore, the internal combustion engine 7 can be utilized as the heat source for warming the passenger compartment 1 (for increasing the temperature in the passenger compartment 1). In order to warm the passenger compartment 1 by heating the air sent to the passenger compartment 1 in the first mode, the air is heated by utilizing the heat from the internal combustion engine 7.

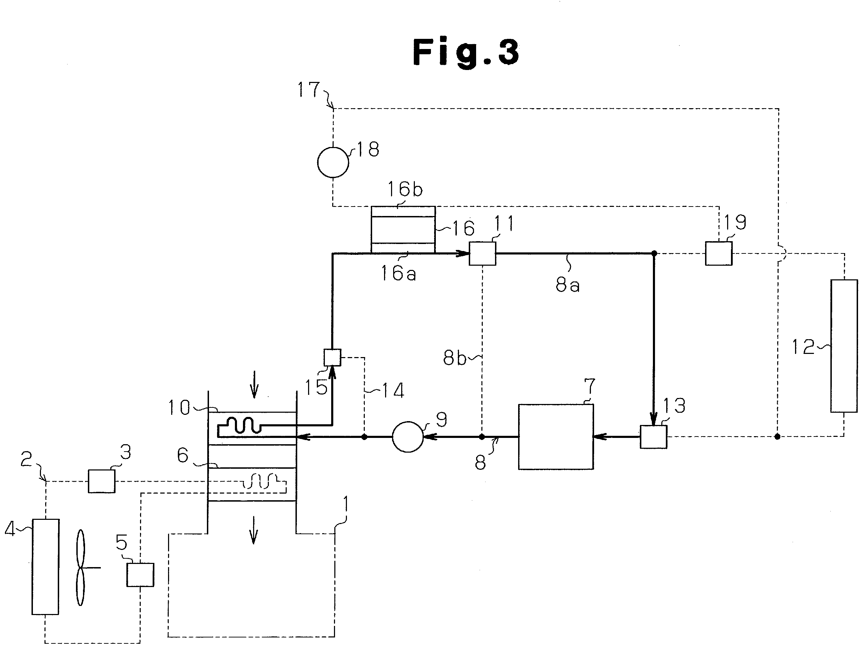

Specifically, as illustrated in Fig. 3, the pump 9 in the circulation circuit 8 is driven to circulate the coolant in the circulation circuit 8, and the changeover valve 11 is operated in order that the first path 8a is used as the path for circulating the coolant. The shutoff state of the heater core 10 to the circulation circuit 8 is canceled through the operation of the shutoff valve 15. Thus, the coolant of which the temperature is increased by the heat from the internal combustion engine 7 flows through the heater core 10. As a result, the air sent to the passenger compartment 1 is heated by the coolant, and the passenger compartment 1 is warmed by the heated air sent to the passenger compartment 1.

When the temperature of the coolant passing through the first path 8a is higher than or equal to the determination value due to the temperature rise of the coolant circulating in the circulation circuit 8 by the heat from the internal combustion engine 7, the thermostat 13 allows the passage of the coolant through the radiator 12. As a result, the coolant circulating in the circulation circuit 8 flows through the radiator 12. Since the coolant flowing through the radiator 12 is cooled by the ambient air, an excessive temperature rise of the coolant circulating in the circulation circuit 8 is prevented.

In the second mode, the Peltier element 16 is deactivated. Therefore, the coolant circulating in the circulation circuit 8 is not heated by the heating portion 16a of the Peltier element 16. Even in the second mode, the compressor 3 in the cooling device 2 is stopped. Therefore, the air sent to the passenger compartment 1 is not cooled by the cooling device 2.

### [Third Mode]

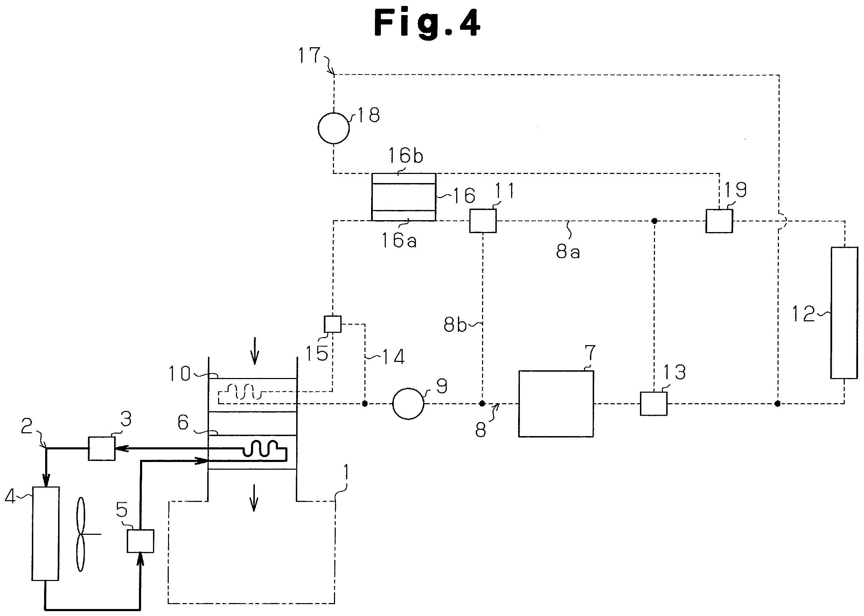

This mode is used for cooling the passenger compartment 1. Specifically, as illustrated in Fig. 4, the compressor 3 of the cooling device 2 is driven to circulate the refrigerant in the cooling device 2. With this, the low-temperature refrigerant passes through the evaporator 6, so that the air sent to the passenger compartment 1 is cooled by the refrigerant. The passenger compartment 1 is cooled by sending the air cooled as described above to the passenger compartment 1.

In the third mode, the air sent to the passenger compartment 1 is not heated. Therefore, it is unnecessary to heat the coolant in the circulation circuit 8 by the Peltier element 16. Accordingly, the Peltier element 16 is deactivated. When the hybrid vehicle runs only with the motor generator, the operation of the pump 9 in the circulation circuit 8 is stopped, so that the circulation of the coolant in the circuit 8 is discontinued.

On the other hand, when the hybrid vehicle runs by using both the motor generator and the internal combustion engine 7, or when the hybrid vehicle runs only with the internal combustion engine 7, the internal combustion engine 7 has to be cooled in order to prevent an excessive temperature rise of the internal combustion engine 7. Therefore, the pump 9 in the circulation circuit 8 is driven to circulate the coolant in the circulation circuit 8, and the changeover valve 11 is changed in order that the first path 8a is used as the path for circulating the coolant. In this case, the heater core 10 is in the shutoff state to the circulation circuit 8 through the changeover operation of the shutoff valve 15 in order not to allow the high-temperature coolant circulating in the circulation circuit 8 to flow through the heater core 10.

### [Fourth Mode]

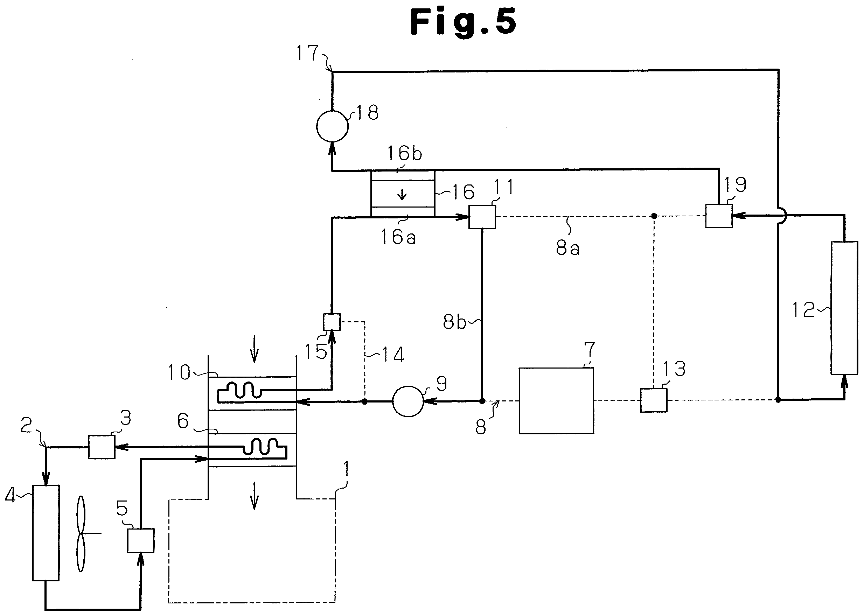

This mode is used to dehumidify and warm the passenger compartment 1, when the hybrid vehicle runs only with the motor generator, in other words, when the hybrid vehicle runs with the internal combustion engine 7 being stopped. Specifically, as illustrated in Fig. 5, the air sent to the passenger compartment 1 is heated as in the first mode (Fig. 2), and the air sent to the passenger compartment 1 is cooled as in the third mode (Fig. 4). As a result, the air sent to the passenger compartment 1 is heated by the heater core 10, and with this state, dehumidified by the evaporator 6. With this process, the temperature of the air increases, and the moisture in the air is reduced. The passenger compartment 1 is dehumidified and warmed by sending the air described above to the passenger compartment 1.

### [Fifth Mode]

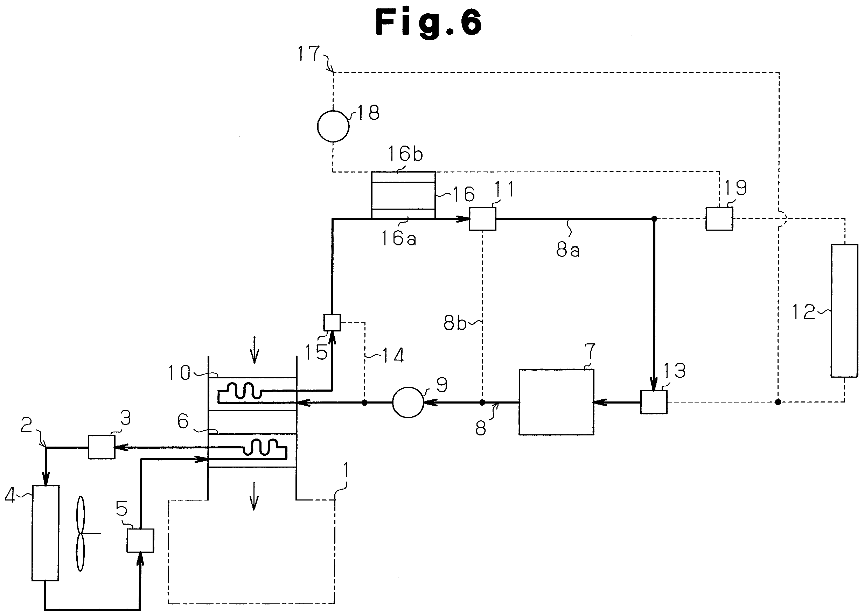

This mode is used to dehumidify and warm the passenger compartment 1 when the hybrid vehicle runs by using both the motor generator and the internal combustion engine 7, or when the hybrid vehicle runs only with the internal combustion engine 7, i.e., when the hybrid vehicle runs with the internal combustion engine 7 being operated. Specifically, as illustrated in Fig. 6, the air sent to the passenger compartment 1 is heated as in the second mode (Fig. 3), and the air sent to the passenger compartment 1 is cooled as in the third mode (Fig. 4). Thus, the passenger compartment 1 is dehumidified and warmed as in the fourth mode.

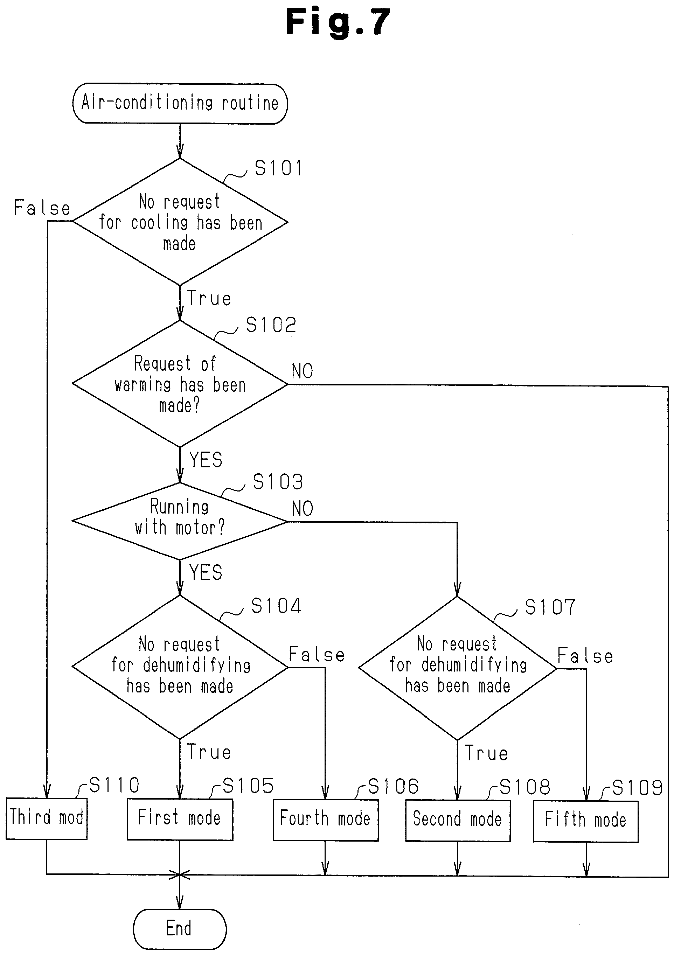

A procedure of the air-conditioning (the temperature regulation) of the passenger compartment 1 will now be described with reference to a flowchart in Fig. 7 indicating an air-conditioning routine. The air-conditioning routine is periodically executed by an interrupt at an interval of a predetermined time through the electronic control device 20, for example.

In this routine, the operation mode of the air-conditioning apparatus is changed to one of the first to fifth modes based upon various requests, such as a request for cooling the passenger compartment 1, a request for warming the passenger compartment 1, and a request for dehumidifying the passenger compartment 1. Whether the request for cooling or warming the passenger compartment 1 is issued or not can be determined based upon the actual temperature in the passenger compartment 1, and a target temperature in the passenger compartment set by an occupant. Whether the request for dehumidifying the passenger compartment 1 is issued or not can be determined according to the operation position of a switch related to dehumidification operated by the occupant.

In the air-conditioning routine, when the request for cooling the passenger compartment 1 is has been made (S101: False), the air-conditioning apparatus is operated in the third mode to cool the passenger compartment 1 (S110).

On the other hand, when it is determined that a request for cooling the passenger compartment 1 has not been made in S101, it is determined whether the request for warming the passenger compartment 1 has been made or not (S102). When the determination is positive, it is determined whether the hybrid vehicle is running only with the motor generator, i.e., whether or not it is difficult to warm the passenger compartment 1 by utilizing the heat from the internal combustion engine 7 (S103). When the determination in S103 is positive, it is determined whether the request for dehumidifying the passenger compartment 1 has been made or not (S104). When the determination in S104 is true, the air-conditioning apparatus is operated in the first mode to warm the passenger compartment 1 (S105). When the determination in S104 is false, the air-conditioning apparatus is operated in the fourth mode to dehumidify and warm the passenger compartment 1 (S106). When the air-conditioning apparatus is operated in the first mode or in the fourth mode, the electronic control device 20 and the changeover valve 11 function as a control unit for changing the path for circulating the coolant in the circulation circuit 8 to the second path 8b, and for allowing the heating portion 16a of the Peltier element 16 to perform the heating operation.

When the determination in S103 is negative, i.e., when it is determined that the hybrid vehicle is not running with only the motor generator, but is running by using both the motor generator and the internal combustion engine 7, or by using only the internal combustion engine 7, it is then determined whether a request for dehumidifying the passenger compartment 1 has been made or not (S107). When the determination in S107 is true, the air-conditioning apparatus is operated in the second mode to warm the passenger compartment 1 (S108). When the determination in S107 is false, the air-conditioning apparatus is operated in the fifth mode to dehumidify and warm the passenger compartment 1 (S109). When the air-conditioning apparatus is operated in the second mode or in the fifth mode, the electronic control device 20 and the changeover valve 11 function as a control unit for changing the path for circulating the coolant in the circulation circuit 8 to the first path 8a, and for allowing the heating portion 16a of the Peltier element 16 to perform the heating operation.

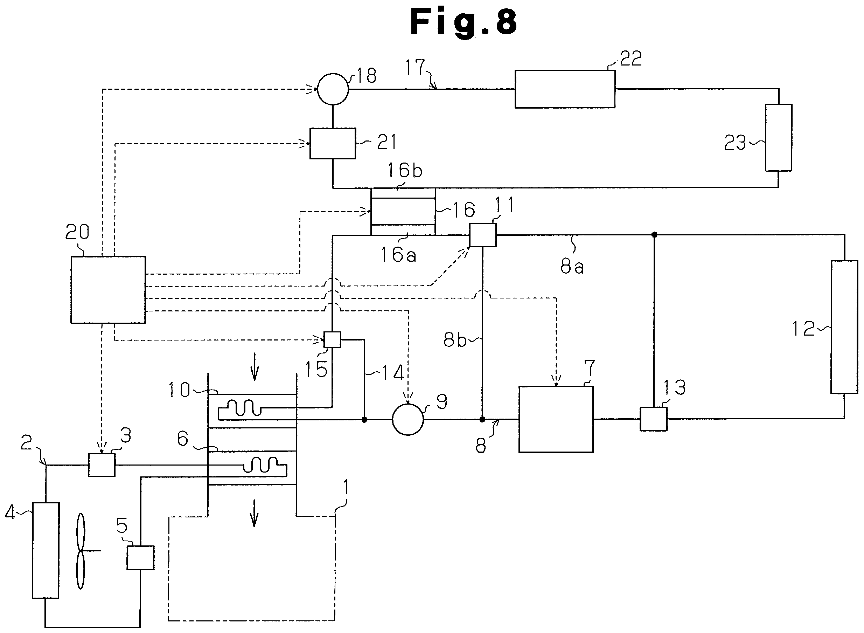

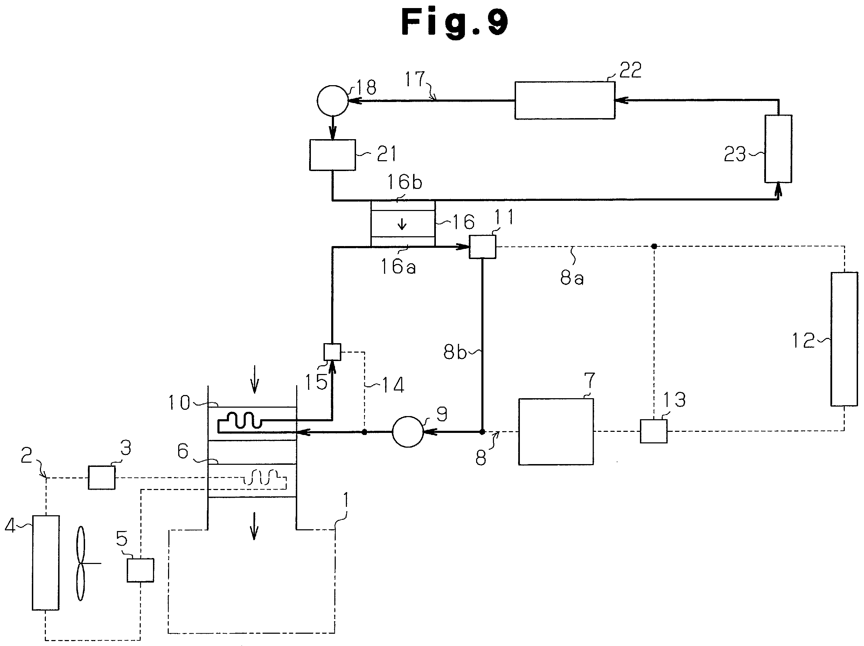

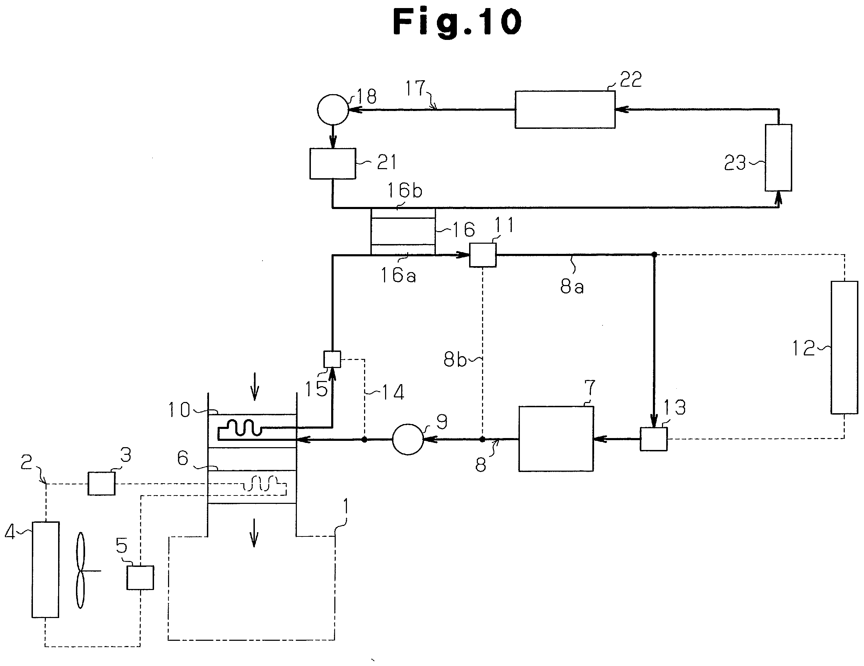

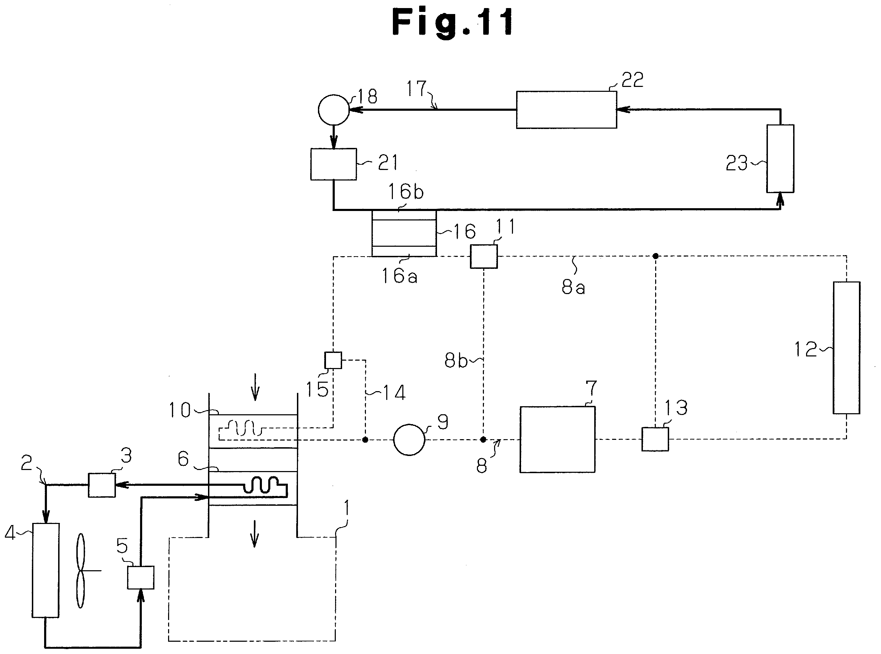

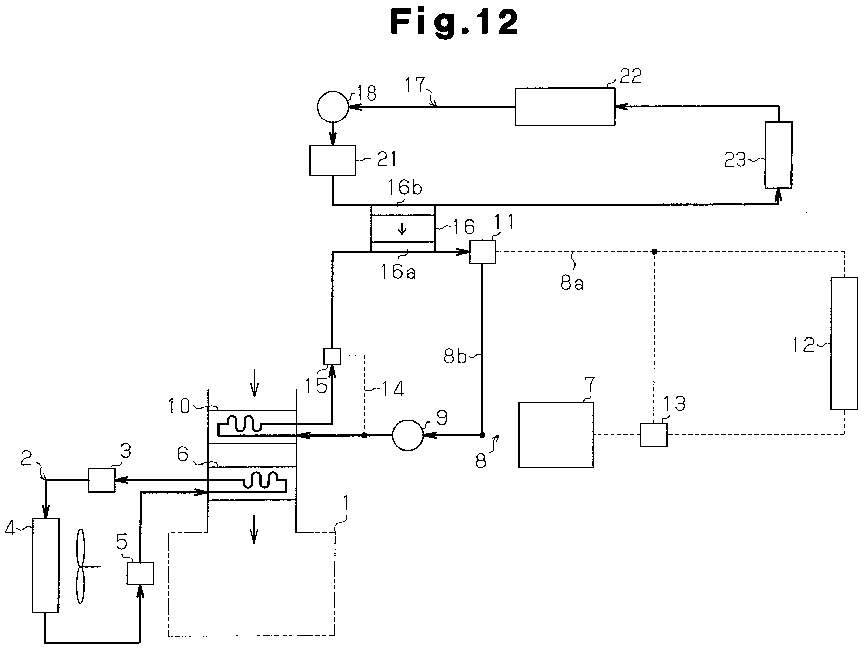

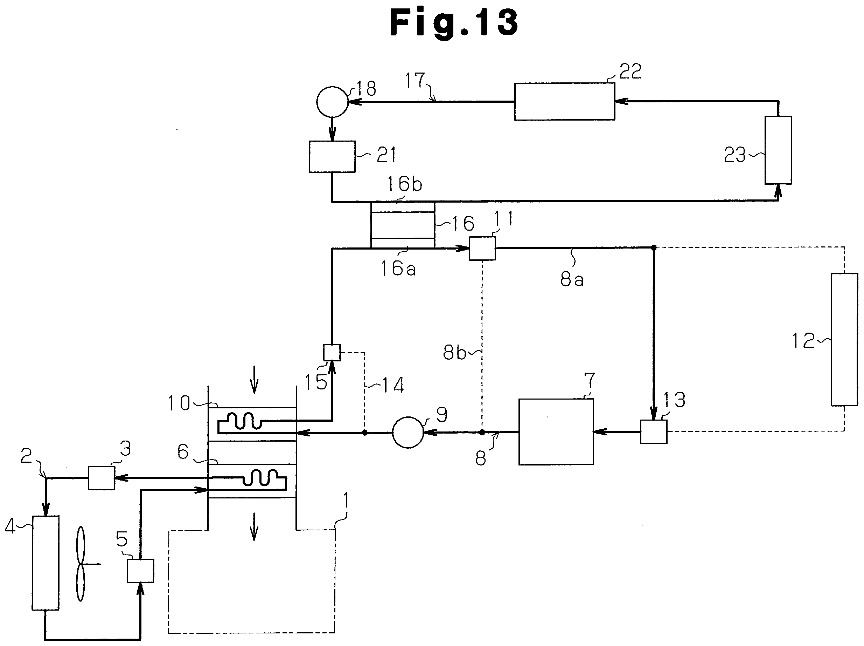

As described above, the present embodiment achieves the following advantages.
(1) When the air sent to the passenger compartment 1 is cooled for the temperature regulation (air-conditioning) of the passenger compartment 1, the air is cooled by the cooling device 2, which is a vapor compression heat pump. When the air sent to the passenger compartment 1 is heated for the temperature regulation (air-conditioning) of the passenger compartment 1, the air can be heated by utilizing the heat from the internal combustion engine 7, or by using the Peltier element 16. Since a cooling device mounted in a conventional air-conditioning apparatus can be used as the cooling device 2, the significant change in the structure of the air-conditioning apparatus is avoided. Even under the condition in which the internal combustion engine 7 is difficult to be used as the heat source for the air-conditioning of the passenger compartment 1, such as the case where the hybrid vehicle runs by using only the motor generator, the air-conditioning of the passenger compartment can be done (the passenger compartment can be warmed), since the air sent to the passenger compartment 1 can be heated by the Peltier element 16. Accordingly, the air-conditioning of the passenger compartment can be realized without a significant change in the structure in the vehicle in which it is difficult to use the internal combustion engine 7 as the heat source for the air-conditioning of the passenger compartment.
(2) The formation of the circulation circuit (corresponding to the circulation circuit 8 in the present embodiment) for circulating the coolant performing heat transfer with the internal combustion engine 7, and the application of heat by the coolant in the circulation circuit to the air sent to the passenger compartment 1 have been done in conventional air-conditioning apparatuses. In the air-conditioning apparatus according to the present embodiment, the coolant in the circulation circuit 8 is heated by the heating portion 16a of the Peltier element 16. Therefore, the air sent to the passenger compartment 1 is heated by the heating portion 16a of the Peltier element 16 via the coolant. In this case, the air sent to the passenger compartment 1 can be heated by the Peltier element 16 by utilizing the circulation circuit provided in the conventional air-conditioning apparatus. Accordingly, a significant change in the structure of the air-conditioning apparatus from the conventional one is avoided. When the internal combustion engine 7 generates heat because the hybrid vehicle is running by using both the motor generator and the internal combustion engine 7, or by using only the internal combustion engine 7, the heat can be collected by the coolant circulating in the circulation circuit 8, and can be utilized for the air-conditioning of the passenger compartment 1 (for warming the passenger compartment 1).
(3) The circulation circuit 8 includes the first path 8a, which allows the coolant in the circuit to pass through the internal combustion engine 7, and the second path 8b, which allows the coolant to bypass the internal combustion engine 7. Either one of the first path 8a and the second path 8b is used as the path for circulating the coolant. In this case, the second path 8b can be selected as the path for circulating the coolant in the circulation circuit 8, when the heat generated by the internal combustion engine 7 is small. On the other hand, the first path 8a can be selected when the heat generated from the internal combustion engine 7 is large.
   Specifically, when the passenger compartment 1 is warmed in the case where the hybrid vehicle runs with the internal combustion engine 7 being stopped (with a small amount of heat from the internal combustion engine 7), the path for circulating the coolant in the circulation circuit 8 is changed to the second path 8b by the electronic control device 20 and the changeover valve 11. In addition, in this case, the heating portion 16a of the Peltier element 16 is heated, and the coolant in the circulation circuit 8 is heated by the heating portion 16a. When the passenger compartment 1 is warmed in the case where the hybrid vehicle is running with the internal combustion engine 7 being operated (with a large amount of heat from the internal combustion engine 7), the path for circulating the coolant in the circulation circuit 8 is changed to the first path 8a by the electronic control device 20 and the changeover valve 11. In addition, in this case, the heating operation of the heating portion 16a of the Peltier element 16 is stopped. Therefore, the process of heating the coolant in the circulation circuit 8 by the heating portion 16a is stopped.
   Since the second path 8b is selected as the path for circulating the coolant in the circulation circuit 8 in the case where the passenger compartment 1 is warmed during when the hybrid vehicle is running with the internal combustion engine 7 being stopped, the removal of the heat of the coolant, which is heated by the heating portion 16a of the Peltier element 16, by the internal combustion engine 7 is prevented. Accordingly, the coolant is effectively heated by the heating portion 16a of the Peltier element 16. Since the first path 8a is selected as the path for circulating the coolant in the circulation circuit 8 in the case where the passenger compartment 1 is warmed during when the hybrid vehicle is running with the internal combustion engine 7 being operated, the coolant can be heated by the internal combustion engine 7, although it is not heated by the heating portion 16a of the Peltier element 16. Accordingly, the heating operation of the heating portion 16a of the Peltier element 16 can be stopped. Therefore, the unnecessary operation of the Peltier element 16 is avoided.
(4) The coolant circuit 17 allows the coolant, which performs heat transfer with the cooling portion 16b of the Peltier element 16, to circulate and guides the coolant to the radiator 12 in the circulation circuit 8 for performing the heat transfer between the coolant and the ambient air by the radiator 12. The heat transfer described above prevents an excessive temperature drop of the coolant in the coolant circuit 17, and further, prevents an excessive temperature drop of the cooling portion 16b of the Peltier element 16, which performs heat transfer with the coolant. In the Peltier element 16, the heat can be more efficiently transferred from the cooling portion 16b to the heating portion 16a, in other words, the coolant in the circulation circuit 8 can be more efficiently heated by the heating portion 16a as the temperature difference between the cooling portion 16b and the heating portion 16a becomes smaller. Since a temperature drop of the cooling portion 16b of the Peltier element 16 is prevented as described above, the temperature difference between the heating portion 16a and the cooling portion 16b of the Peltier element 16 is reduced, whereby the heating portion of the Peltier element 16 can efficiently heat the coolant. [Second Embodiment]
   A second embodiment will now be described with reference to Figs. 8 to 13.
   As illustrated in Fig. 8, a coolant circuit 17 in an air-conditioning apparatus according to the present embodiment is different from the one in the first embodiment. The coolant circuit 17 is provided independent of the circulation circuit 8. The coolant circuit 17 cools various electric devices such as the motor generator 21 and the electronic device 22 including the inverter. The motor generator 21 functions as the drive source of the hybrid vehicle, and it is controlled by the electronic control device 20. The coolant circuit 17 includes a heat exchanger 23, which transfers heat between the coolant circulating in the circuit and the ambient air.
   The different part from the first embodiment in the first to fifth modes of the air-conditioning apparatus will be described. The first to fifth modes of the air-conditioning apparatus are illustrated in Figs. 9 to 13. As understood from these drawings, the coolant in the coolant circuit 17 is circulated by operating the pump 18 in any of the first to fifth modes. Thus, various electric devices such as the motor generator 21, and the electronic device 22 including the inverter in the hybrid vehicle are cooled by the coolant in the coolant circuit 17.
   In the first mode (Fig. 9) and the fourth mode (Fig. 12), heat is transferred from the cooling portion 16b to the heating portion 16a, in other words, the coolant in the circulation circuit 8 is heated by the heating portion 16a, by operating the Peltier element 16. In this case, the temperature decreases in the cooling portion 16b of the Peltier element 16. The coolant having the decreased temperature due to the heat transfer between the cooling portion 16b and the coolant in the coolant circuit 17 is used to cool the electric devices (the motor generator 21, the electronic device 22). On the other hand, the coolant circulating in the coolant circuit 17 receives heat from the electric devices, so that an excessive temperature drop of the coolant is prevented.
   The present embodiment achieves the advantages described below.
(5) Even if the coolant in the coolant circuit 17 is cooled by the cooling portion 16b due to a temperature drop of the cooling portion 16b of the Peltier element 16 in the first mode and the fourth mode of the air-conditioning apparatus, an excessive temperature drop of the coolant is prevented, since the coolant receives heat from the electric devices. Therefore, an excessive temperature drop of the cooling portion 16b of the Peltier element 16, which performs the heat transfer with the coolant, is also prevented. The temperature difference between the heating portion 16a and the cooling portion 16b of the Peltier element 16 is reduced by the inhibition of a temperature drop of the cooling portion 16b, whereby the coolant is efficiently heated by the heating portion 16a of the Peltier element 16.
(6) When a temperature drop of the coolant in the coolant circuit 17 cannot be prevented only by the heat from the electric devices under the condition in which the coolant in the coolant circuit 17 is cooled by the cooling portion 16b of the Peltier element 16, an excessive temperature drop of the coolant is prevented by the heat transfer between the coolant and the ambient air in the heat exchanger 23 in the coolant circuit 17. Therefore, an excessive temperature drop of the cooling portion 16b of the Peltier element 16, which performs the heat transfer with the coolant, is also prevented. Even in the case where a temperature drop of the coolant in the coolant circuit 17 cannot be prevented only by the heat from the electric devices, the temperature difference between the heating portion 16a and the cooling portion 16b of the Peltier element 16 is reduced, whereby the coolant in the circulation circuit 8 is efficiently heated by the heating portion 16a of the Peltier element 16.

### [Other Embodiments]

The respective embodiments described above may be modified as described below.

In the first and second embodiments, the coolant in the circulation circuit 8 may be supplementally heated by the Peltier element 16 in the second mode or in the fifth mode.

In the first and second embodiments, the second path 8b and the changeover valve 11 in the circulation circuit 8 may be removed in order that the coolant circulating in the circulation circuit 8 always passes through the internal combustion engine 7.

In the first and second embodiments, the cooling portion 16b of the Peltier element 16 does not always have to perform heat transfer with the coolant in the coolant circuit 17.

In the first and second embodiments, the air sent to the passenger compartment 1 may directly be heated by the heating portion 16a of the Peltier element 16. Description of the Reference Numerals
- 1: Passenger compartment
- 2: Cooling device
- 3: Compressor
- 4: Condenser
- 5: Expansion valve
- 6: Evaporator
- 7: Internal combustion engine
- 8: Circulation circuit
- 9: Pump
- 10: Heater core
- 8a: First path
- 8b: Second path
- 11: Changeover valve
- 12: Radiator
- 13: Thermostat
- 14: Passage
- 15: Shutoff valve
- 16: Peltier element
- 16a: Heating portion
- 16b: Cooling portion
- 17: Coolant circuit
- 18: Pump
- 19: Control valve
- 20: Electronic control device
- 21: Motor generator
- 22: Electronic device
- 23: Heat exchanger

## Claims

1. A vehicle air-conditioning apparatus for adjusting a temperature in a passenger compartment (1) by cooling or heating air sent to the passenger compartment, the vehicle air-conditioning apparatus comprising:
a cooling device (2) that cools the air sent to the passenger compartment;
a Peltier element (16) that heats the air sent to the passenger compartment;
a circulation circuit (8) that circulates coolant performing heat transfer with an internal combustion engine (7) mounted on a vehicle, and heats air sent to the passenger compartment by the coolant, wherein
the Peltier element includes a heating portion (16a) that heats the coolant in the circulation circuit, the Peltier element heating the air sent to the passenger compartment through the heating operation by the heating portion,
the circulation circuit includes a first path (8a) that allows the coolant circulating in the circulation circuit to pass through the internal combustion engine and a second path (8b) that allows the coolant to bypass the internal combustion engine, **characterized in that**
either one of the first path (8a) and the second path (8b) is used as a path for circulating the coolant, wherein
when the internal combustion engine generates a small amount of heat, the second path (8b) is selected as the path for circulating the coolant in the circulation circuit to heat the coolant by the heating portion of the Peltier element, and
when the internal combustion engine generates a large amount of heat, the first path (8a) is selected as the path for circulating the coolant in the circulation circuit to heat the coolant by the internal combustion engine.

2. The vehicle air-conditioning apparatus according to claim 1, wherein the circulation circuit (8) includes a radiator (12),
when the temperature of the coolant circulating in the circulation circuit is greater than or equal to a predetermined determination value, the radiator allows to flow therein to perform heat transfer between the coolant and ambient air,
the Peltier element includes a cooling portion (16b) that performs heat transfer with the coolant circulating in a coolant circuit (17), and
when the internal combustion engine is stopped and the heating operation of the heating portion of the Peltier element is performed, the coolant circuit guides the coolant circulating therein to the radiator and performs heat transfer between the coolant and ambient air at the radiator.

3. The vehicle air-conditioning apparatus according to claim 1, wherein
the Peltier element includes a cooling portion (16b) that performs a heat transfer with the coolant circulating in a coolant circuit, (17) and the coolant circuit cools an electric device (21,22) mounted on the vehicle by the coolant circulating therein.

4. The vehicle air-conditioning apparatus according to claim 3, wherein the coolant circuit (17) includes a heat exchanger (23) that allows the coolant circulating in the coolant circuit to flow in the heat exchanger, thereby performing heat transfer between the coolant and ambient air.

5. The vehicle air-conditioning apparatus according to claim 1, comprising a control unit (11, 20), wherein
when the passenger compartment is warmed in a case where the vehicle runs with the internal combustion engine stopped, the controller switches the path for circulating the coolant in the circulation circuit to the second path (8b) and causes the heating portion of the Peltier element to be heated, and
when the passenger compartment is warmed in a case where the vehicle runs with the internal combustion engine being operated, the control unit switches the path for circulating the coolant in the circulation circuit to the first path (8a) and stops the heating operation of the heating portion of the Peltier element.

## Patentansprüche

1. Fahrzeugklimatisierungsvorrichtung zum Einstellen einer Temperatur in einer Fahrgastzelle (1) durch Kühlen oder Heizen von Luft, die in die Fahrgastzelle strömt, wobei die Fahrzeugklimatisierungsvorrichtung aufweist:
eine Kühlvorrichtung (2), die die in die Fahrgastzelle strömende Luft kühlt;
ein Peltierelement (16), das die in die Fahrgastzelle strömende Luft heizt;
einen Zirkulationskreislauf (8), der ein Kühlmittel zirkuliert, das eine Wärmeübertragung mit einer in einem Fahrzeug eingebauten Verbrennungskraftmaschine (7) durchführt und Luft, die in die Fahrgastzelle strömt, durch das Kühlmittel aufheizt, wobei:
das Peltierelement einen Heizabschnitt (16a) beinhaltet, der das Kühlmittel in dem Zirkulationskreislauf aufheizt, wobei das Peltierelement die Luft, die in die Fahrgastzelle strömt, durch den Heizvorgang des Heizabschnitts aufheizt,
wobei der Zirkulationskreislauf einen ersten Pfad (8a), der es dem Kühlmittel, das in dem Zirkulationskreislauf zirkuliert, erlaubt, durch die Verbrennungskraftmaschine zu strömen, und einen zweiten Pfad (8b), der es dem Kühlmittel ermöglicht, die Verbrennungskraftmaschine zu umgehen, beinhaltet, **dadurch gekennzeichnet, dass** jeder von dem ersten Pfad (8a) und dem zweiten Pfad (8b) als ein Pfad verwendet wird, um das Kühlmittel zu zirkulieren, wobei, wenn die Verbrennungskraftmaschine eine geringe Wärmemenge erzeugt, der zweite Pfad (8b) als der Pfad zum Zirkulieren des Kühlmittels in dem Zirkulationskreislauf ausgewählt wird, um das Kühlmittel durch den Heizabschnitt des Peltierelements aufzuheizen, und,
wenn die Verbrennungskraftmaschine eine große Wärmemenge erzeugt, der erste Pfad (8a) als der Pfad zum Zirkulieren des Kühlmittels in dem Zirkulationskreislauf ausgewählt wird, um das Kühlmittel durch die Verbrennungskraftmaschine aufzuheizen.

2. Fahrzeugklimatisierungsvorrichtung nach Anspruch 1, wobei
der Zirkulationskreislauf (8) einen Kühler (12) beinhaltet,
wenn die Temperatur des Kühlmittels, das in dem Zirkulationskreislauf zirkuliert, gleich oder höher ist als ein vorgegebener Bestimmungswert, der Kühler ein Strömen darin ermöglicht, um die Wärmeübertragung zwischen dem Kühlmittel und der Umgebungsluft durchzuführen,
das Peltierelement einen Kühlabschnitt (16b) beinhaltet, der eine Wärmeübertragung mit dem Kühlmittel, das in einem Kühlmittelkreislauf (17) zirkuliert, durchführt, und
wenn die Verbrennungskraftmaschine gestoppt wird und der Heizvorgang des Heizabschnitts des Peltierelements durchgeführt wird, der Kühlkreislauf das Kühlmittel, das darin zirkuliert, zu dem Kühler leitet und eine Wärmeübertragung zwischen dem Kühlmittel und der Umgebungsluft an dem Kühler durchführt.

3. Fahrzeugklimatisierungsvorrichtung nach Anspruch 1, wobei
das Peltierelement einen Kühlabschnitt (16b) beinhaltet, der eine Wärmeübertragung mit dem Kühlmittel, das in einem Kühlmittelkreislauf (17) zirkuliert, durchführt, und
der Kühlmittelkreislauf mit dem darin zirkulierenden Kühlmittel eine elektrische Vorrichtung (21, 22) kühlt, die an dem Fahrzeug befestigt ist.

4. Fahrzeugklimatisierungsvorrichtung nach Anspruch 3, wobei der Kühlmittelkreislauf (17) einen Wärmetauscher (23) beinhaltet, der es dem Kühlmittel, das in dem Kühlmittelkreislauf zirkuliert, ermöglicht, in den Wärmetauscher zu strömen, wodurch eine Wärmeübertragung zwischen dem Kühlmittel und der Umgebungsluft durchgeführt wird.

5. Fahrzeugklimatisierungsvorrichtung nach Anspruch 1, aufweisend eine Steuereinheit (11, 20), wobei,
wenn in einem Fall, bei dem das Fahrzeug mit gestoppter Verbrennungskraftmaschine fährt, die Fahrgastzelle erwärmt wird, die Steuerung den Pfad zum Zirkulieren des Kühlmittels in dem Zirkulationskreislauf auf den zweiten Pfad (8b) umschaltet und den Heizabschnitt des Peltierelements veranlasst, aufgeheizt zu werden, und
wenn in einem Fall, bei dem das Fahrzeug mit laufender Verbrennungskraftmaschine fährt, die Fahrgastzelle erwärmt wird, die Steuerung den Pfad zum Zirkulieren des Kühlmittels in dem Zirkulationskreislauf auf den ersten Pfad (8a) umschaltet und den Heizvorgang des Heizabschnitts des Peltierelements stoppt.

## Revendications

1. Équipement de climatisation de véhicule pour régler la température dans un habitacle (1) en refroidissant ou en chauffant l'air envoyé à l'habitacle, l'équipement de climatisation de véhicule comprenant :
un dispositif de refroidissement (2) qui refroidit l'air envoyé à l'habitacle ;
un élément Peltier (16) qui chauffe l'air envoyé à l'habitacle ;
un circuit de circulation (8) qui fait circuler le fluide caloporteur exécutant la transmission thermique avec un moteur à combustion interne (7) monté sur un véhicule et chauffe l'air envoyé à l'habitacle par le fluide caloporteur,
dans lequel :
l'élément Peltier comprend une partie de chauffage (16a) qui chauffe le fluide caloporteur dans le circuit de circulation, l'élément Peltier chauffant l'air envoyé à l'habitacle grâce à l'opération de chauffage par la partie de chauffage,
le circuit de circulation comprend un premier trajet (8a) qui permet au fluide caloporteur circulant dans le circuit de circulation de traverser le moteur à combustion interne et un second trajet (8b) qui permet au fluide caloporteur d'éviter le moteur à combustion interne,
**caractérisé en ce qu'**on utilise l'un ou l'autre des premier trajet (8a) et second trajet (8b) comme trajet pour faire circuler le fluide caloporteur,
dans lequel :
quand le moteur à combustion interne produit une petite quantité de chaleur, on choisit le second trajet (8b) comme trajet pour faire circuler le fluide caloporteur dans le circuit de circulation afin de chauffer le fluide caloporteur à l'aide de la partie de chauffage de l'élément Peltier, et
quand le moteur à combustion interne produit une grande quantité de chaleur, on choisit le premier trajet (8a) comme trajet pour faire circuler le fluide caloporteur dans le circuit de circulation afin de chauffer le fluide caloporteur à l'aide du moteur à combustion interne.

2. Équipement de climatisation de véhicule selon la revendication 1, dans lequel le circuit de circulation (8) comprend un radiateur (12), dans lequel :
quand la température du fluide caloporteur qui circule dans le circuit de circulation est supérieure ou égale à une valeur de fixation prédéterminée, le radiateur permet au flux qui y circule d'exécuter la transmission thermique entre le fluide caloporteur et l'air ambiant,
l'élément Peltier comprend une partie de refroidissement (16b) qui exécute une transmission thermique avec le fluide caloporteur circulant dans un circuit (17) de fluide caloporteur, et
quand le moteur à combustion interne est à l'arrêt et que l'opération de chauffage par la partie de chauffage de l'élément Peltier s'effectue, le circuit de fluide caloporteur guide le fluide caloporteur y circulant vers le radiateur et exécute une transmission thermique entre le fluide caloporteur et l'air ambiant au niveau du radiateur.

3. Équipement de climatisation de véhicule selon la revendication 1, dans lequel :
l'élément Peltier comprend une partie de refroidissement (16b) qui exécute une transmission thermique avec le fluide caloporteur circulant dans un circuit (17) de fluide caloporteur, et
le circuit de fluide caloporteur refroidit un dispositif électrique (21, 22) monté sur le véhicule à l'aide du fluide caloporteur y circulant.

4. Équipement de climatisation de véhicule selon la revendication 3, dans lequel le circuit (17) de fluide caloporteur comprend un échangeur thermique (23) qui permet au fluide caloporteur circulant dans le circuit de fluide caloporteur de s'écouler dans l'échangeur thermique, exécutant de ce fait une transmission thermique entre le fluide caloporteur et l'air ambiant.

5. Équipement de climatisation de véhicule selon la revendication 1, comprenant une unité de commande (11, 20), dans laquelle,
quand on chauffe l'habitacle dans un cas où le véhicule roule avec le moteur à combustion interne à l'arrêt, le régulateur commute le trajet pour faire circuler le fluide caloporteur dans le circuit de circulation vers le second trajet (8b) et fait chauffer la partie de chauffage de l'élément Peltier, et,
quand on chauffe l'habitacle dans un cas où le véhicule roule avec le moteur à combustion interne en cours de fonctionnement, l'unité de commande commute le trajet pour faire circuler le fluide caloporteur dans le circuit de circulation vers le premier trajet (8a) et arrête l'opération de chauffage de la partie de chauffage de l'élément Peltier.
